# EUROPEAN PATENT SPECIFICATION

(11) **EP 3 753 458 B1**
(45) Date of publication and mention of the grant of the patent: **02.08.2023**
(21) Application number: 20179330.4
(22) Date of filing: 10.06.2020
(51) Int. Cl.: A47J 31/00, A47J 31/44

(54) **PORTABLE MACHINE FOR BEVERAGES**
TRAGBARE GETRÄNKEZUBEREITUNGSMASCHINE
MACHINE DE PRÉPARATION DE BOISSONS PORTABLE

(30) Priority: 20.06.2019 IT 201900009618
(43) Date of publication of application: 23.12.2020
(73) Proprietor: Anghileri, Giuseppe, 23900 Lecco (LC) (IT)
(72) Inventor: Anghileri, Giuseppe, 23900 Lecco (LC) (IT)
(74) Representative: Valentini, Giuliano

(56) References cited:
- EP-A1- 3 078 306
- EP-A2- 1 369 070
- CH-B1- 700 109
- CN-U- 201 855 136
- CN-U- 205 597 762

## Description

### Technical Field of the Invention

The present invention concerns a portable machine for preparing beverages, for example coffee or other warm beverages obtained from soluble products such as, for example, teas, chocolates, herbal teas, etc. depending on the content of the capsule used. The machine is devoid of a water tank, which can be provided from a common water bottle.

### Prior art

The portable machines known for preparing beverages, for example coffee, teas and herbal teas, have a relatively small size, but are not small enough to be easily transported and include fixed protruding parts, which make their transport even more inconvenient.

The international application WO 00/71006 describes a machine for preparing hot water. The water container of the machine is a conventional plastic bottle made of PET (polyethylene terephthalate), which is inserted head down into a bottle-holder compartment. The opening of the neck of the plastic bottle is screwed onto a connection valve, which is in turn placed into a connecting element in fluidic communication with a connecting tube. The water is sucked from the plastic bottle by means of a pump and transported into a boiler, where the water is heated and subsequently sent into a glass. The machine is provided with further components for preparing a beverage, for example coffee. Such further components are for example a connecting sleeve for fixing a reserve tank for the grained coffee and an electric motor to measure the amount of powdered coffee desired.

This machine is very complex and bulky due to the different protruding parts, such as for example the bottler-holder compartment and the coffee container.

Another electric device for heating a given volume of water is described in the international patent application WO 98/32692. The device is compact and operative with a mineral water bottle available on the market. The device comprises a housing to place the neck of the bottle head down, a small inner tank under the housing. The inner tank can be provided with a high-power electric heat resistance or with an instant heater to immediately heat the water present inside the tank. The hot water is released into a glass containing instant coffee.

This device heats water only, but does not prepare a beverage.

The European patent application EP 1483991 A1 describes an electric coffee machine with the use of ground coffee. The machine has great dimensions and uses a water bottle to prepare a beverage. The water is sucked from the bottle by means of a rigid suction duct provided with a filter at its end, which end is connected to the bottle through the opening on the neck facing upwards.

This machine is very bulky due to the protruding parts, and is thus not convenient for transport and use in a car.

GB 1,057,957 concerns a liquid dispenser that uses a water bottle turned upside down inside a housing formed in the upper part of the machine. The water coming out of the bottle runs into a tank where it can be heated with heating means positioned inside the tank itself. The machine is supplied with electric power through an electric cable fixed on the side wall of the machine. The heated water is delivered through the raising of a sealing element that closes the delivery opening.

EP 1369070 concerns a coffee machine comprising a boiler for heating water and a compartment containing coffee powder. The water for preparing the beverage is provided by a bottle turned upside down inside a seat adapted to accommodate the neck of the water bottle. The seat is formed in a mouth connected to a duct. The water is sucked from the bottle through the duct inside the boiler, where the water is heated and sent into the compartment containing coffee powder for the extraction of the beverage. The neck of the bottle is provided with a valve to prevent the water from coming out of the bottle when it is inserted into the seat. The valve comprises a cylindrical shaped tube having coupling means with the neck of the bottle and/or with the inner surface of the mouth. The tube comprises a central hole in which a rod can move vertically. A shutter, which is inserted into the mouth of the bottle, is arranged on the end of the rod. The shutter closes the radial openings of the cross component of the tube, when the rod is stimulated by a helical spring arranged around the rod. The mouth is provided with a central pin to push the rod upwards, when the bottle, already provided with the valve, is inserted into the seat; the valve opens and the water is allowed to come out of the bottle.

This portable coffee machine is also bulky and difficult to transport on a trip due to the complex shape with many protruding parts.

CN 102113822 describes a coffee machine without a water tank comprising a heating device, an extraction chamber, a support for a water bottle and a tubing system to connect the different components of the machine. The support is arranged on the upper wall of the machine and comprises a seat for the insertion of the neck of the bottle. A tube fitting is connected to the seat and includes a valve for blocking the flow of water. The heating device has an inlet for the water to be heated and an outlet for the hot water. The water for preparing the beverage is provided by a replaceable water bottle, whose neck is inserted into the tube fitting. A valve is provided downstream of the support for the water bottle to control the flow rate of water from the bottle to the heating device for preparing the beverage. The heating device has an inlet for the water to be heated and an outlet for the hot water. The warm water outlet is connected to the head of the extraction chamber containing ground coffee, while the water inlet of the machine is connected to the water outlet of the valve controlling the flow rate.

This coffee machine is also bulky, difficult to transport, inconvenient due to the use of ground coffee and unhygienic due to the support for the bottle, which always remains open to the environment.

CN205597762U describes a machine for preparing beverages in which the supply of water is provided from a bottle. The machine comprises a support formed of two separate parts: a first part is connected to the casing of the machine and can rotate with respect to it around a vertical axis, while a second part is removable to allow it to be screwed onto the thread of the neck of the bottle. A valve is installed on the second removable part and is operated by an actuator when the two separate parts are matched to one another.

### Summary of the Invention

Object of the present invention is to suggest a portable machine for preparing a beverage that is compact, with reduced dimensions to allow its easy transport, its storing, its use in a small space and its simple use.

According to the invention, this is achieved by a portable machine for preparing beverages according to claim 1. Further peculiar characteristics of the present invention are set forth in the respective dependent claims.

A portable machine for preparing beverages according to the present invention is devoid of a water tank and comprises a casing having at least one side wall, wherein the casing contains heating means to heat the water for preparing the beverage, a tubing system for transporting water, a valve comprising an upper half-valve and a lower half-valve, and a housing for a disposable container containing the product for preparing the beverage. The machine comprises a carriage connected to the tubing system, wherein the carriage houses at least the lower half-valve. The tubing system connects the carriage with the heating means and with the housing for the disposable container.

The upper half valve and the lower half-valve are housed in distinct supports. The upper half valve is housed in a support adapted to be connected to the neck of a water bottle, while the lower half-valve is housed irremovable from the carriage, the latter being connected to the tubing system for transporting water for the preparation of a beverage. The support of the upper half-valve includes a cavity provided with thread to connect a bottle thereto by screwing. In alternative, the bottle can be connected with the support of the upper half-valve by means of an interlocking of the "snap-fit connection" type.

According to the present invention, the carriage housing the lower half-valve is movable between an operative position, in which it protrudes from the contour of the casing of the machine, and a resting position, in which it is arranged concealingly with respect to the contour of the casing. The carriage can be for example translatable or rotatable.

Thanks to the concealment of the carriage into the machine, the surface of the carriage, which comes into contact with the lower surface of the support of the valve, does not stay exposed to the environment, thus achieving a more hygienic operation with respect to known portable machines.

The upper surface of the carriage includes a seat of a size such as to allow the insertion of the support of the upper half-valve therein. The seat of the carriage is used to house the upper half-valve and also acts as a water collection tank.

The circumference of the seat of the upper surface of the carriage is delimited by elastically deformable teeth that allow the fastening of the support of the upper half-valve into the carriage. When the bottle, provided with the support of the upper half-valve, is inserted into the seat of the upper surface of the carriage, the valve opens and the upper half-valve goes into fluidic communication with the lower half-valve inserted into the central seat of the upper surface of the carriage, the water can thus be transported to the heating means by means of a pump for the preparation of the beverage.

The portable machine of the present invention operates with disposable containers containing ground, granular or freeze-dried powder products for preparing different types of beverages, such as for example coffee, chocolates, teas, herbal teas, etc. Consequently, the type of beverage prepared by the machine depends on the content of the container inserted inside the appropriate housing of the machine. The disposable container is selected for example between a capsule and a pod.

The portable machine of the present invention can operate with the electric power supply network and/or a battery.

In an embodiment, the machine of the present invention is provided with a panel outlet for the electric connection by inserting an electric power cable having a plug compatible with the outlet of the network. If the plug of the cable is not compatible with the plug of the machine, an electric plug adapter is used to achieve the electric connection of the machine.

According to a further particular embodiment of the machine of the present invention, the portable machine includes an electrical battery only or in combination with the electric outlet. The battery is for example a rechargeable and removable battery, and is arranged inside a compartment of the machine that can be easily reached so that to allow to recharge it easily by using a battery charger and to easily dismount and mount it.

The portable machine for preparing a beverage of the present invention is very compact because it is devoid of a water tank, the electric cable is separated from the machine, being insertable and detachable from the side wall of the casing of the machine, and the lower half-valve is inserted into a carriage, which is arranged concealingly in the side wall of the casing of the machine. During the transport, the electric cable can be housed in a free compartment of the machine, for example the compartment for collecting capsules or pods.

Moreover, the portable machine of the present invention can be easily transported on a trip, as well as it allows a simple use and a quick preparation of different types of beverages thanks to the use of capsules or pods containing different types of ingredients depending on the beverage selected by the user.

### Brief Description of the Drawings

Further characteristics and advantages of the present invention will become clearer in the schematic drawings attached, in which:
- Figure 1 is a perspective view of an embodiment of the portable machine according to the present invention;
- Figure 2 depicts the same machine of Figure 1 in use together with a water bottle inserted into the carriage, a capsule and a cup for the beverage delivered;
- Figures 3A and 3B depict different views of an upper half-valve to be fixed on the neck of a water bottle;
- Figure 4 depicts the carriage together with the lower half-valve;
- Figure 5 shows a water bottle provided with an upper half-valve;
- Figure 6 depicts the same machine of Figure 1, wherein the concealable carriage is translated concealingly inside the casing of the machine;
- Figure 7 depicts the same machine of Figure 1, wherein the carriage is turned over and housed concealingly inside a seat of a side wall of the casing of the machine;
- Figure 8 shows some examples of electric cables that can be used in the machine of the present invention; and
- Figure 9 depicts the same machine of Figure 1 provided with an electric outlet according to an embodiment of the present invention.

### Detailed Description

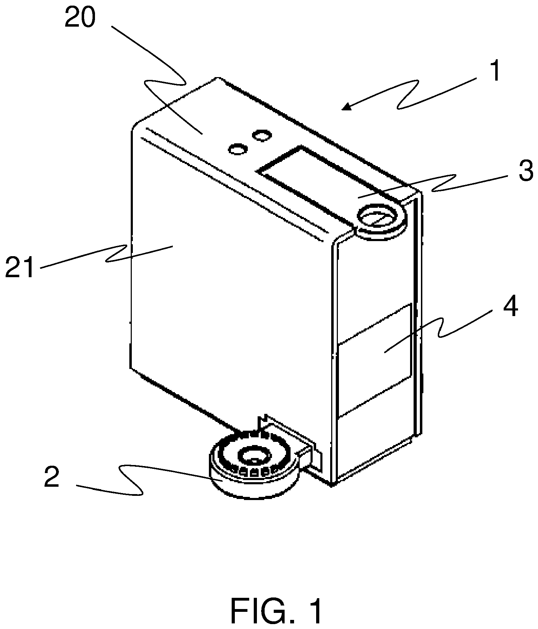

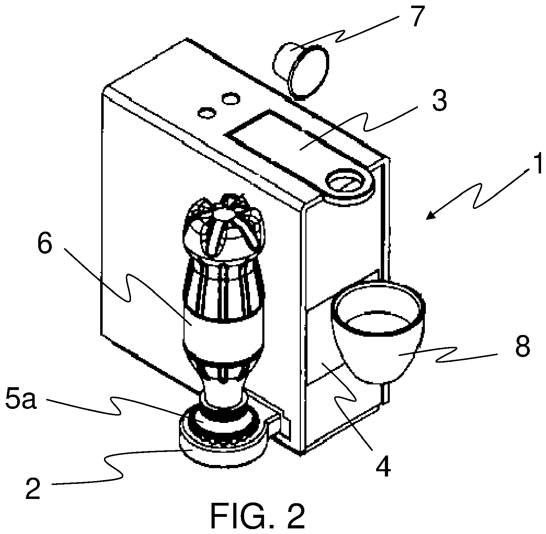

A portable machine 1 for preparing beverages is schematically depicted in Figures 1 and 2, comprising a casing 20 having at least one side wall 21, wherein the casing 20 contains heating means (not shown) to heat water for preparing the beverage, a tubing system (not shown), a carriage 2 inside which the lower half-valve 9 is inserted to house an upper half-valve 5 whose support 5a is screwed onto the neck of a water bottle 6. A disposable capsule 7, containing the product for the preparation of a beverage selected by the user, can be inserted into the housing 3. The beverage prepared is delivered into a cup 8 accommodated inside a housing 4. The housing 4 is formed in a wall of the casing 20 and has an opening for inserting the cup 8.

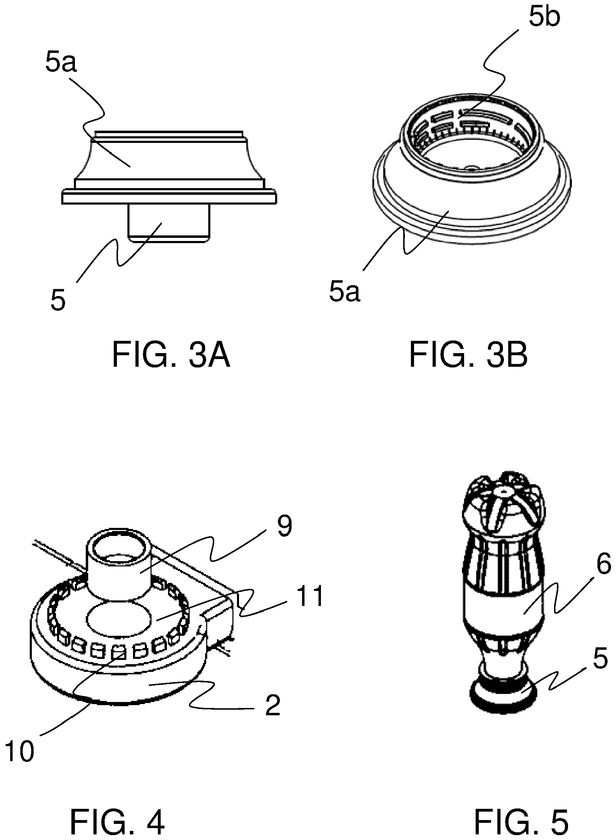

Figures 3A and 3B schematically depict an upper half-valve 5 used in an embodiment of the present invention. In particular, the upper half-valve 5 is housed in a support 5a that comprises a cavity 5b provided for example with a thread couplable with the neck of a bottle 6.

Figure 4 depicts, schematically and enlarged, the carriage 2 of the portable machine 1 shown in Figures 1 and 2. The carriage 2 includes a seat 11 having a circumference delimited by elastically deformable teeth 10 on its upper surface. The diameter of the seat 11 is such as to allow the support 5a installed on the bottle 6 to be safely inserted and sealingly fastened, as depicted for example in Figure 5. The lower half-valve 9 is placed irremovably inside a cavity formed in the center of the upper surface of the carriage 2.

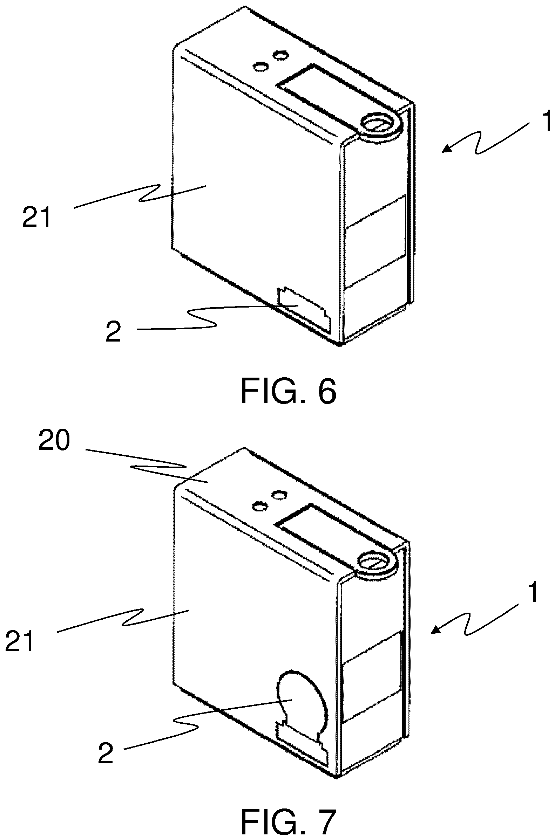

The carriage 2 of the portable machine 1 is translatably concealed, as shown in Figure 6, in a seat inside the casing 20, or concealed in a rotatable or foldable manner inside the side wall 21 of the casing 20, as shown in Figure 7.

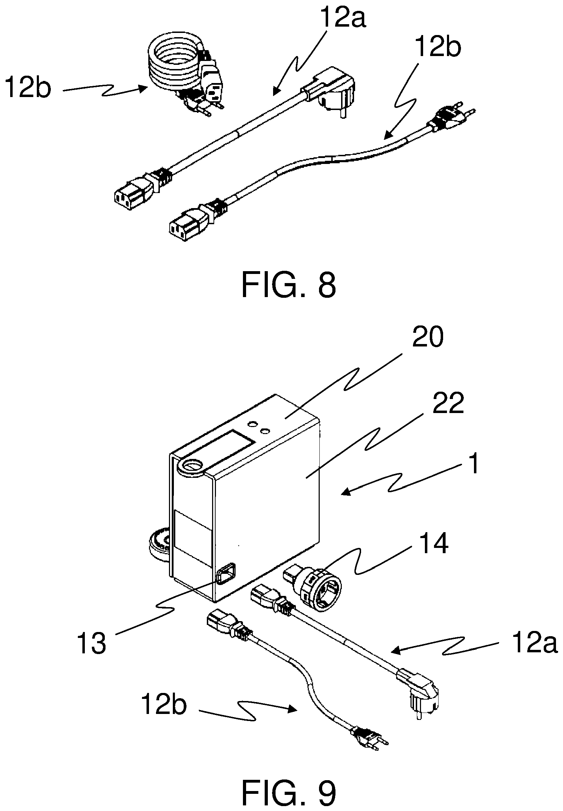

Figure 8 shows some examples for the different types of power cables 12 usable in the portable machine 1 of the present invention. The cables 12a and 12b shown have a three-pin female connector and a "German" 12a or "Italian" 12b two-pin male plug.

The electric power for the portable machine 1 for preparing beverages of the present invention can be provided both by means of an electric power supply cable 12 shown by way of example in Figure 8, and by means of an extractable electrical battery (not shown). If a power cable 12 is used to make an electric connection, an electric panel outlet 13, for example of the C14 type, is provided for example in a side wall 22 of the casing 20 of the machine 1 to facilitate the simple and quick insertion and extraction of the cable 12a, 12b in and out of the outlet 13, as shown in Figure 9. Whenever the male and/or female connectors of the power cable 12a, 12b are not compatible with the electric outlet 13, a commonly known adapter 14 is used.

In the absence of the power supply network, the machine 1 can be supplied electrically by a rechargeable battery housed inside the casing 20.

## Claims

1. A portable machine (1) for preparing beverages devoid of a water tank and comprising a casing (20) having at least one side wall (21, 22), wherein the casing (20) contains heating means to heat water, a tubing system for transporting water, a valve, a housing (3) for a disposable container (7), the disposable container containing the product for preparing the desired beverage, wherein said valve comprises an upper half-valve (5) and a lower half-valve (9), and wherein the portable machine (1) comprises a carriage (2) connected to the tubing system and adapted for housing said lower half-valve (9), **characterized in that** the carriage (2) is movable between an operative position, in which it protrudes from the contour of the casing (20), and a resting position, in which it is arranged concealingly with respect to the contour of the casing (20).

2. The machine (1) according to claim 1, **characterized in that** the upper half-valve (5) is adapted to be connected to the neck of a water bottle (6) to supply the water needed for the preparation of the beverage.

3. The machine according to claim 1 or 2, **characterized in that** the upper half-valve (5) is housed inside a support (5a) including a cavity (5b) provided with thread.

4. The machine (1) according to any one of claims 1 to 3, **characterized in that** the lower half-valve (9) is irremovable from the carriage (2).

5. The machine (1) according to any one of claims 1 to 4, **characterized in that** the carriage (2) has an upper surface adapted for housing the support (5a) of the upper half-valve (5) and **in that** said upper surface has a seat (11) with a diameter such as to allow the insertion of the upper half-valve (5).

6. The machine (1) according to claim 5, **characterized in that** the circumference of said seat (11) is delimited by small elastically deformable teeth (10).

7. The machine (1) according to claim 1, **characterized in that** the carriage (2) can be folded for being housed in a seat of the side wall (21) of the casing (20) when it is in resting position.

8. The machine (1) according to claim 1, **characterized in that** the carriage (2) can be translated horizontally for being housed in a seat placed inside the casing (20) when it is in resting position.

9. The machine (1) according to any one of claims 1 to 8, **characterized in that** one side wall (22) of the casing (20) comprises a panel outlet (13) for the connection to the electric power supply network by means of a cable.

10. The machine (1) according to claim 1, **characterized by** comprising a rechargeable battery for supplying electric power to the machine.

11. The machine (1) according to any one of claims 1 to 10, **characterized in that** the disposable container (7) is selected from a capsule and a pod.

## Patentansprüche

1. Tragbare Maschine (1) zum Zubereiten von Getränken ohne Wassertank und aufweisend ein Gehäuse (20) mit mindestens einer Seitenwand (21, 22), wobei das Gehäuse (20) Heizmittel zum Erwärmen von Wasser aufweist, ein Leitungssystem zum Transportieren von Wasser, ein Ventil, und ein Gehäuse (3) für einen Einwegbehälter (7), wobei der Einwegbehälter das Produkt zur Zubereitung des gewünschten Getränks enthält, wobei das Ventil ein oberes Halbventil (5) und ein unteres Halbventil (9) aufweist und wobei die tragbare Maschine (1) einen Wagen (2) aufweist, der mit dem Leitungssystem verbunden ist und zur Aufnahme des unteren Halbventils (9) ausgelegt ist, **dadurch gekennzeichnet, dass** der Wagen (2) zwischen einer Betriebsposition, in der er aus der Kontur des Gehäuses (20) herausragt, und einer Ruheposition, in der er in Bezug auf die Kontur des Gehäuses (20) verdeckt angeordnet ist, bewegbar ist.

2. Maschine (1) nach Anspruch 1, **dadurch gekennzeichnet, dass** das obere Halbventil (5) an den Hals einer Wasserflasche (6) angeschlossen werden kann, um das für die Zubereitung des Getränks benötigte Wasser bereitzustellen.

3. Maschine nach Anspruch 1 oder 2, **dadurch gekennzeichnet, dass** das obere Halbventil (5) in einem Träger (5a) untergebracht ist, der einen mit Gewinde versehenen Hohlraum (5b) aufweist.

4. Maschine (1) nach einem der Ansprüche 1 bis 3, **dadurch gekennzeichnet, dass** das untere Halbventil (9) nicht vom Wagen (2) abnehmbar ist.

5. Maschine (1) nach einem der Ansprüche 1 bis 4, **dadurch gekennzeichnet, dass** der Wagen (2) eine obere Fläche aufweist, die zur Aufnahme des Trägers (5a) des oberen Halbventils (5) geeignet ist, und dass diese obere Fläche einen Sitz (11) mit einem Durchmesser aufweist, der das Einsetzen des oberen Halbventils (5) ermöglicht.

6. Maschine (1) nach Anspruch 5, **dadurch gekennzeichnet, dass** der Umfang des Sitzes (11) durch kleine elastisch verformbare Zähne (10) begrenzt ist.

7. Maschine (1) nach Anspruch 1, **dadurch gekennzeichnet, dass** der Wagen (2) zusammenklappbar ist, um in einem Sitz der Seitenwand (21) des Gehäuses (20) aufgenommen zu werden, wenn er sich in seiner Ruheposition befindet.

8. Maschine (1) nach Anspruch 1, **dadurch gekennzeichnet, dass** der Wagen (2) horizontal verschiebbar ist, um in einem Sitz innerhalb des Gehäuses (20) aufgenommen zu werden, wenn er sich in seiner Ruheposition befindet.

9. Maschine (1) nach einem der Ansprüche 1 bis 8, **dadurch gekennzeichnet, dass** eine Seitenwand (22) des Gehäuses (20) einen Schalttafelausgang (13) für den Anschluss an das Stromversorgungsnetz mittels eines Kabel aufweist.

10. Maschine (1) nach Anspruch 1, **dadurch gekennzeichnet, dass** sie eine wiederaufladbare Batterie zur Stromversorgung der Maschine aufweist.

11. Maschine (1) nach einem der Ansprüche 1 bis 10, **dadurch gekennzeichnet, dass** der Einwegbehälter (7) aus einer Kapsel und einem Sockel ausgewählt ist.

## Revendications

1. Machine portable (1) pour la préparation de boissons dépourvue de réservoir d'eau et comprenant un boîtier (20) ayant au moins une paroi latérale (21, 22), dans laquelle le boîtier (20) contient des moyens de chauffage pour chauffer l'eau, un système de tuyauterie pour transporter l'eau, une vanne, un logement (3) pour un récipient jetable (7), le récipient jetable contenant le produit pour la préparation de la boisson désirée, dans laquelle ladite vanne comprend une demi-vanne supérieure (5) et une demi-vanne inférieure (9), et dans laquelle la machine portable (1) comprend un chariot (2) relié au système de tuyauterie et adapté pour loger ladite demi-vanne inférieure (9), **caractérisée en ce que** le chariot (2) est mobile entre une position de fonctionnement, dans laquelle il fait saillie par rapport au contour du boîtier (20), et une position de repos, dans laquelle il est disposé de manière dissimulée par rapport au contour du boîtier (20).

2. Machine (1) selon la revendication 1, **caractérisée en ce que** la demi-vanne supérieure (5) est adaptée pour être connectée au goulot d'une bouteille d'eau (6) afin de fournir l'eau nécessaire à la préparation de la boisson.

3. Machine selon la revendication 1 ou 2, **caractérisée en ce que** la demi-vanne supérieure (5) est logée à l'intérieur d'un support (5a) comprenant une cavité (5b) pourvue d'un filetage.

4. Machine (1) selon l'une quelconque des revendications 1 à 3, **caractérisée en ce que** la demi-vanne inférieure (9) est inamovible du chariot (2).

5. Machine (1) selon l'une quelconque des revendications 1 à 4, **caractérisée en ce que** le chariot (2) présente une surface supérieure adaptée pour loger le support (5a) de la demi-vanne supérieure (5) et **en ce que** cette surface supérieure présente un siège (11) dont le diamètre permet l'insertion de la demi-vanne supérieure (5).

6. Machine (1) selon la revendication 5, **caractérisée en ce que** la circonférence dudit siège (11) est délimitée par de petites dents (10) élastiquement déformables.

7. Machine (1) selon la revendication 1, **caractérisée en ce que** le chariot (2) peut être plié pour être logé dans un siège de la paroi latérale (21) du boîtier (20) lorsqu'il est en position de repos.

8. Machine (1) selon la revendication 1, **caractérisée en ce que** le chariot (2) peut être déplacé horizontalement pour être logé dans un siège placé à l'intérieur du boîtier (20) lorsqu'il est en position de repos.

9. Machine (1) selon l'une quelconque des revendications 1 à 8, **caractérisée en ce qu'**une paroi latérale (22) du boîtier (20) comprend une sortie de panneau (13) pour la connexion au réseau d'alimentation électrique au moyen d'un câble.

10. Machine (1) selon la revendication 1, **caractérisée en ce qu'**elle comprend une batterie rechargeable pour alimenter la machine en énergie électrique.

11. Machine (1) selon l'une quelconque des revendications 1 à 10, **caractérisée en ce que** le récipient jetable (7) est choisi parmi une capsule et une dosette.
